# EUROPEAN PATENT SPECIFICATION

(11) **EP 2 921 275 B1**
(45) Date of publication and mention of the grant of the patent: **05.10.2016**
(21) Application number: 15154911.0
(22) Date of filing: 12.02.2015
(51) Int. Cl.: B29C 43/24, B29C 43/52, B29C 43/46, B29C 33/30

(54) **Calender comprising a roll supporting drum suitable to allow quick exchange of a thermoregulated engraved roll**
Kalander mit auf einer Trommel gelagerten temperierten Walzen zum Schnellwechseln
Calendre avec tambour comportant de rouleaux thermorégulés à échange rapide

(30) Priority: 12.02.2014 IT MI20140197
(43) Date of publication of application: 23.09.2015
(73) Proprietor: Comerio Ercole S.p.A., 21052 Busto Arsizio (Varese) (IT)
(72) Inventor: LUALDI, Renato, 21052 Busto Arsizio VA (IT)
(74) Representative: Spina, Alessandro

(56) References cited:
- EP-A1- 1 424 184
- EP-A2- 1 659 358
- DE-A1-102004 033 235

## Description

The present invention generally relates to calenders or similar apparatuses for working continuous ribbons as disclosed in the preamble of annexed claim 1, wherein a surface of a roll or both rolls of a pair of calender rolls contacting a ribbon material to be treated is thermoregulated and comprises grooves, engravings or embossings.

Among the most common calendering operations that require these properties of one or more of the calendering rolls, the following examples may be cited:
- continuous calendering of webs or profiles made of rubber, plastic materials, textile fabrics or paper materials;
- coupling of one or more webs or layers on a ribbon;
- lamination of two or more layers made of rubber, plastic materials or non-woven fibers;
- embossing of plastic materials, fabrics, non-woven fibers or paper;
- thermocoupling of carded or continuous filiform non-woven fibers;
- compaction of non-woven fibers.

The rolls of a calendering machine, that generally undergo great lamination forces, may operate at relatively high temperatures, so that it is usually necessary to control the superficial temperature of the roll mantles depending on the peculiar requirements of the type of operation that has to performed.

Since some operations are exothermic while other operations are endothermic, the mantle of a roll must be provided with heat transfer means suitable to heat or cool its working surface so as to keep its temperature uniform and constant.

An example of a calender roll having a channeled shaft with these features is disclosed in the Italian patent No. 1355390 in the Applicant's name, as well as in the corresponding European patent EP 1359358 B1. EP-A-1 424 184 discloses a calender for processing plastic material comprising a device for inserting or removing rolls. DE-A-10 2004 033 235 discloses a four roll calender comprising means for variation of the position of the third roll.

Many or all of the above processes may require different geometries of the mantle surface of a roll of the pair of calendering rolls, as well as a different size of the grooves, engravings or embossings suitable to provide a manufactured article with the desired features according to the type of finished product desired.

Hygiene-sanitary tissues may e.g. require liquid permeability, softness, as well as a higher or lower resistance to abrasion.

Reinforcing mats made of thermoplastic fibers coupled at predefined spots and suitably spaced apart may require a certain extendibility degree along a number of directions, or conversely no extendibility degree in any direction, deriving from the local pinching at the lamination nip defined between the profiles of the engraved/embossed mantle surface of a roll and the flat or engraved/embossed surface of the heated mantle of the other roll.

The orientation of the grooves, engravings or embossings of the surfaces of the mantles of both rollers may be configured so as to define different distribution patterns of the coupling points on the surface of the finished product.

Calenders for these processes are typically large and heavy machines wherein productivity strongly depends on processing speed, as well as on the maximum width of the continuous ribbon of the material to be treated.

It often happens that the same material e.g. intended for the manufacturing of multilayer articles (such as diapers and the like), is used to make different layers, every one of which requires a different processing.

The operator of a calender has thus to manage production so as to minimize the number of relatively long and laborious operations needed to change a roll comprising grooves, engravings or embossings whenever a different processing of a ribbon of material has to start, either when the material is the same or when it is of a different type. Often, the mantle of a second roll of the pair of calendering rolls has a smooth surface and does not need to be replaced.

Ancillary devices that facilitate roll change operations are known and widely used. However, since the working temperature of the rolls is very high and considering that the thermoregulation fluid used to heat the mantle is usually a pressurized oil at a temperature of more than 200°C, a roll change operation is time consuming, delicate and not free from risks for an operator, who must be careful and often has to clean the engraved surface of a roll which is arranged behind another hot roll placed in front of him. Furthermore, in the frequent case of different processing operations performed on a same ribbon material fed to a calender, the ribbon must every time be fitted and guided into the calender after completing the replacement operation of a roll.

The European patent EP 1424184 B1, in the Applicant's name, discloses a calender for the processing of plastic and similar materials that may be configured with four or five rolls arranged according to a "L" pattern either regular or reversed. The calender also comprises a set of calendering rolls and a roller train arranged subsequently to an outlet calendering roll so as to lift off and pull a calendered material received from said outlet calendering roll.

The calender also comprises means configured to invert the rotation direction of the calendering rolls when switching from a roll pattern to the other one, as well as means configured to insert or withdraw one of the rollers of the roller train between the latter and the outlet calendering roll and to correspondingly make the roller train to move forward or backward when setting the calender for operation with four or five calendering rolls.

The calender further comprises means configured to move forward a conveyor belt suitable to feed a material to be calendered to a falling position arranged between a second and a third calendering roll of the set, as well as to move said conveyor belt backwards between a falling position of the material between a first and a second calendering roll, when setting the calender for a four-roll or a five-roll configuration, respectively.

The Applicant has found an effective solution to these drawbacks and to the loss of productivity caused by the time needed to replace a roll, which is the object of the present invention.

The solution to the drawbacks of the prior art and the objective of the invention is achieved by the calender as defined in annexed claim 1. Preferred embodiments are disclosed in the subclaims.

The new calender basically comprises a rotatable drum with two or more rolls having a thermoregulated mantle and whose surface comprises grooves, engravings or embossings the geometry, arrangement and size of which correspond to the specific characteristics of a product to be manufactured, and thus having different geometric geometries. The ends of the rolls are restrained to two rotatable disks mounted at a certain height to side shoulders of a frame of the calender.

The forced circulation of the thermoregulation fluid allowing to adjust the mantle temperature of the rollers is achieved by way of a multiple two-way distributor (inlet and outlet of each roll) rotatably supported by an axial support fixed to the outer face of one of the two rotatable disks and employing rotatable hydraulic two-way couplings arranged at the ends of the respective rolls and at the free end of the multiple distributor. Valves integrated into the multiple distributor or associated therewith allow to select the roll or rolls to be heated at the process temperature required.

Some embodiments of the invention are now disclosed only by way of example so as to allow a correct and easier understanding of the invention. Reference will be made to the accompanying drawings wherein:
Figure 1 is a front view of an exemplary embodiment of a calender according to the invention of the applicant;
Figures 2 and 3 are three-dimensional views obtained by photographic renderings the calender of figure 1;
Figure 4 is a side view that schematically shows a calender with the rotatable drum according to the invention and object of this disclosure comprising two second rolls;
Figure 5 is a side view that schematically shows a calender with the rotatable drum according to the invention and object of this disclosure comprising three second rolls.

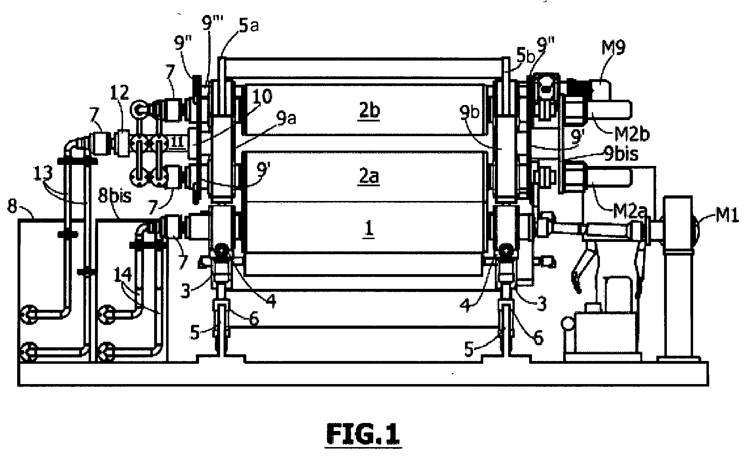

With reference to figures 1, 2 and 3, two rotatable discs 9a, 9b are supported at a certain height of elevation at respective circular seats extending over an arch of more than 180°, generally comprised between 200° and 240°. The seats are formed in side shoulders 5a, 5b of a frame of a calender, said shoulders rising from a base thereof.

The rotatable discs 9a, 9b are supported by and may rotate on shoes made of antifriction materials suitably fitted inside the respective seats formed in each shoulder 5a, 5b according to configurations known in the art.

Each of the two rolls indicated as 2a and 2b in the illustrated example features a different geometry of the engraved mantle surface and comprises a shaft with internal inlet and outlet ducts for a fluid allowing thermoregulation of the mantle; the shaft may rotate on bearings (typically roller bearings) fitted in respective supports housed in the rotatable discs 9a, 9b.

The surfaces of the mantles of the two rolls 2a and 2b, may generally comprise grooves, engravings, reliefs or embossings whose geometry, pattern and size are suitable to provide a material to be calendered with specific features.

The so-configured two-rolls rotatable drum of this embodiment may be rotated in one direction or another by an angle of 180° by way of a motorized drive M9 and a gear transmission including toothed wheels 9' integral with the rotatable discs 9a, 9b and having passage openings for the roll shafts, as well as toothed wheels 9" respectively keyed at the ends of a transmission shaft 9"' which mesh with the toothed wheels 9'.

Each roll supported by the rotatable drum is individually driven by a respective motor-speed reducing gear box group M2a and M2b, which may be assembled on a supporting counter-plate or disc 9bis connected to the rotatable disk 9b by way of one or more spacers (in this example a single axial spacer), as well as by way of mechanical joints arranged between a power transmission outlet of the gear motor and the shaft end of the motor of the respective engraved roll.

Rotation of the drum allows to carry a selected engraved roll 2a in a working position of the pair of calendering rolls, which is thus formed by the engraved rolls 2a and 1, which in most cases may have a smooth (i.e. not engraved) surface.

Adjustment of the nip between the two rolls is possible by lifting roll 1, which is typically supported by bearings installed in supporting blocks movable along vertical guides of the shoulders 5a, 5b by way of hydraulic actuators 14.

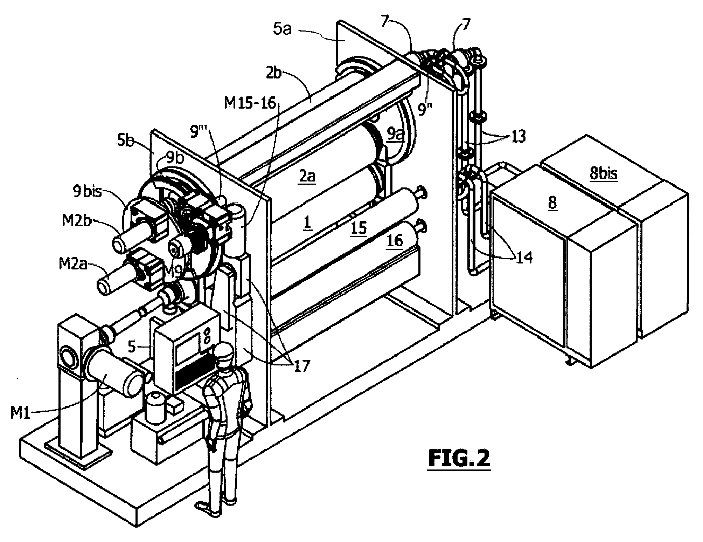

Figure 2 shows two cooling rollers 15, 16 the cooled mantles of which receive an article coming out from the nip between the pair of heated rolls 1 and 2a (or 2b) that carry out thermocoupling, form apertures or perform other operations on the material fed to the calender; figure 2 also shows the related gear motor groups M15 M16 and gear transmissions 17 allowing to drive both rollers 15 and 16 of the pair.

The gear motor group M9 is the component allowing to rotate the drum supporting the rolls through the gear transmission 9', 9" and 9'" so as to change the second heated roll, i.e. to replace a roll having a mantle with an engraved surface with another roll having a mantle with a different engraved surface.

Figure 2 also shows a gear motor group M1 and an associated universal joint for driving the first heated roll 1 of the calender, allowing to move the roll upwards or downwards so as to adjust the nip; the figure also shows a control device and two hydraulic pumping units, namely a unit 8 for the fluid heating the mantles of the calendering rolls and a unit 8bis for the fluid cooling the mantle of the first or both rollers 15 and 16 that receive the finished product.

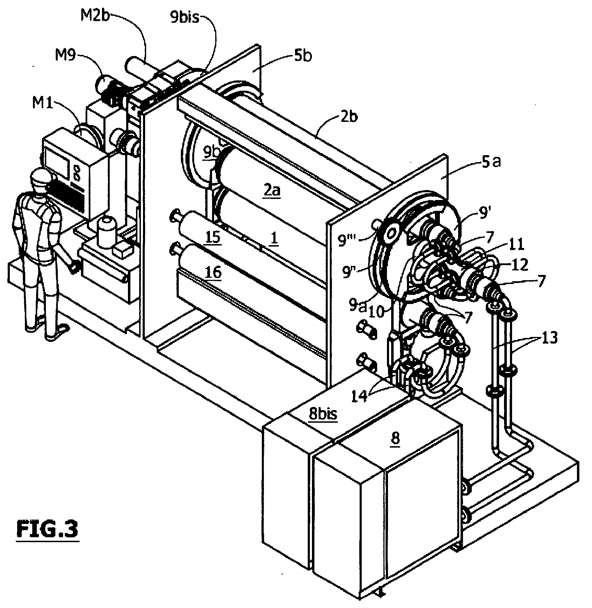

Figure 3 shows the implementation of the distribution of heating and cooling fluids to the hollow shafts of the rolls 1 and 2a and to the cooling roller 15.

A tubular distributor-collector 11 comprises two pairs of nozzles configured to feed and receive the fluid and is mounted in axial alignment with a closing flange 10 connected to the rotatable assembly made up of the rotatable disc 9a and the toothed wheel 9'. At the other end of the tubular distributor-collector 11a primary rotatable hydraulic joint 12 is coupled, in particular a two-way joint hydraulically connected through a pair of tubes 13 to the inlet and outlet flow distributing manifolds for feeding and receiving the fluid to the hydraulic unit 8 for the heated fluid allowing thermoregulation of the mantle surfaces of the two rolls 1 and 2a.

From the two pairs of inlet and outlet flow distributing manifolds for feeding and receiving the fluid connected to the tubular distributor-collector 11 two pairs of flexible tubes are branched off so as to allow hydraulic connection to respective two-way secondary rotatable hydraulic joints 7 connected to the inlet and outlet for the fluid defined inside of the hollow shafts of the two rolls 1 and 2a.

Rotation of the first rotatable disc 9a at the side of these hydraulic connections to the pumping control units of the rotatable drum carrying a number of selectable second rolls suitable to carry out a specific processing does not cause any stress or clogging of the tubes.

Known valves installed between the tubular distributor-collector 11 and the tow-way secondary rotatable hydraulic joints 7 allow to interrupt circulation of the thermoregulation heated fluid to the engraved roll that has been deselected, e.g. roll 2b in the figures. The provision of valves also allows to disassemble and possibly replace a deselected roll roller, as need be.

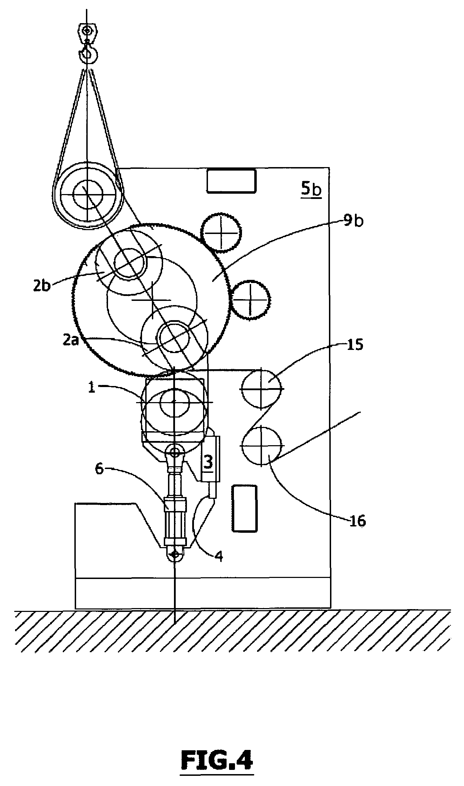

The side view of figure 4 schematically shows a calender with the rotary drum according to the invention and object of this disclosure, which comprises two second rolls 2a and 2b as in the embodiment described above; this is to underline the fact that the calender may comprise a larger number of rolls featuring different geometries of the surfaces of the respective heated mantles.

Depending on the diameters of the engraved second rollers 2ᵢ required for the different processing patterns of a ribbon of material to be treated, there may be a limit to the number of second rolls that can be mounted on the rotatable discs 9a, 9b, also considering that the second rolls may also have a different diameter, being it possible to adjust the nip by lifting the first roll 1 accordingly.

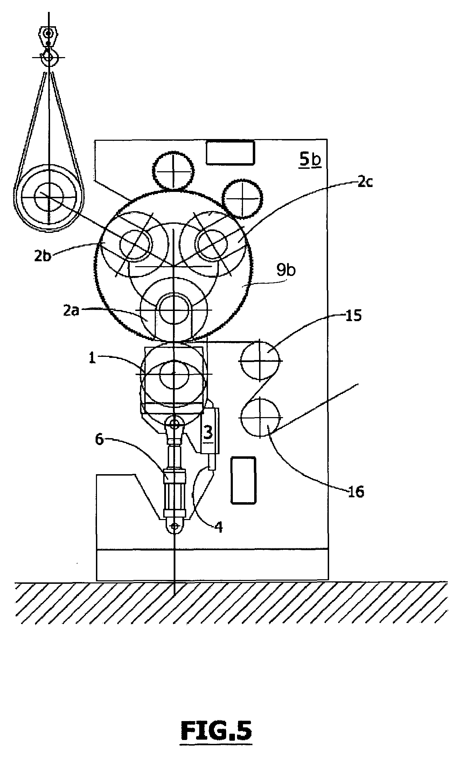

The side view of figure 5 schematically shows a calender with the rotatable drum according to the invention and object of this disclosure comprising three second rolls 2a, 2b, 2c, still having the same diameter as in the case of figure 4, although they might also have different diameters, which therefore offers three, instead of two, possibilities for the selection of a processing pattern of the ribbon of material to be treated. In the illustrated example, selection of the second roll is made by way of one or more rotations of 120°.

## Claims

1. A calender for working materials requiring one or both rolls of a laminating pair of rolls to have a thermoregulated mantel having a surface morphology comprising engravings, grooves or embossings of geometry, distribution and dimensions specific for morphological characteristics to be conferred to the laminated material, comprising a first roll (1) with a hollow shaft supported in bearings installed in support blocks (3) shiftable along parallel guides (4) over two side shoulders or risers (5a, 5b) of a fixed structure of the calender by way of actuators (6) in order to adjust the nip between the first roll (1) and a second roll (2a), of similar structure of the first roll (1), rotatable two-way hydraulic joints (7) coupled to one end of the hollow shafts of both rolls (1, 2a) for circulating a thermoregulation fluid through inlet and outlet flow distributing manifolds internal to the hollow shafts of the rolls and hydraulically connected to respective nozzles of a hydraulic pumping unit (8), **characterized in that**
- said side shoulders (5a, 5b) of the fixed structure of the calender support respective rotatable disks (9a, 9b) on which are mounted bearings for supporting hollow shafts of a plurality of second rolls (2a, 2b) having different surface morphologies on their mantels, and which are selectable for use by rotating by a certain angle in a direction or in the opposite direction said rotatable disks (9a, 9b), as far as bringing the desired one of said plurality of second rolls to a counter-opposed position to said first roll (1);
- to a first rotatable disk (9a) supporting said ends of hydraulic coupling of the hollow shafts of said second rolls (2a, 2b) is axially connected a blind end of a tubular distributor-collector (11) having pairs of inlet and outlet nozzles of the thermoregulation fluid connected by flexible tubes to respective rotatable two-way hydraulic joints for hydraulic connection to the ends of respective hollow shafts of said second rolls (2a, 2b), the other end of the distributor-collector (11) being coupled to a rotatable two-way primary hydraulic joint (12), hydraulically connected by a pair of tubes (13) to said respective nozzles of the pumping uniit (8);
- to the other rotatable disk (9b) supporting the opposite ends of the hollow shafts of the second rolls (2a, 2b) is connected a counter-plate (9bis) on which are installed individual motor-speed reducing gear box groups (M2a, M2b) of motion transmission through mechanical couplings to the respective hollow shafts;
- motorized means (M9, 9', 9", 9'") for rotating said rotatable disks (9a, 9b) in one direction or in the opposite direction by a given angle of rotation being further comprised.

2. The calender according to claim 1, **characterized in that** it comprises at least one hollow shaft cooling roll (15) on a laminated article exiting the nip between said heated rolls (1, 2a), over the cooled mantel of which the article runs, and a second central pumping unit (8bis) of a cooling fluid, connected through a pair of tubes (14) and the rotatable, two-way hydraulic joint (7) to inlet and outlet ducts of said cooling fluid present at the end of the hollow shaft of the cooling roll (15).

3. The calender according to claim 1, **characterized in that** said motorized means comprise a motor-speed reducer gear box group (M2a, M2b) and a transmission composed by first toothed wheels (9') fastened to respective rotatable disks (9a, 9b) and having slots for the passage of the end of said hollow shafts of said second rolls (2a) and second toothed wheels (9") keyed respectively to the ends of a transmission shaft (9"') and engaged with said first toothed wheels (9').

4. The calender according to claim 1, **characterized in that** said second rolls (2a, 2b) having different surface morphology and being supported in said rotatable disks (9a, 9b) are two rolls individually selectable by rotation of said rotatable disks (9a, 9b) by an angle of 180°.

5. The calender according to claim 1, **characterized in that** said second rolls having different surface morphology and being supported in said rotatable disks (9a, 9b) are three rolls (2a, 2b, 2c) individually selectable by rotation of said rotatable disks (9a, 9b) by an angle of 120°.

## Patentansprüche

1. Ein Kalander zum Bearbeiten von Materialien, welche es erfordern, dass eine oder beide Walzen eines Paares von Laminierwalzen einen thermisch regulierten Mantel aufweisen mit einer Oberflächenmorphologie umfassend Gravuren, Nuten oder Einprägungen mit einer Geometrie, Verteilung und Dimensionen typisch für auf das zu laminierende Material zu übertragende, morphologische Eigenschaften, umfassend eine erste Walze (1) mit einer Hohlwelle, die in Lagern gelagert ist, welche in Lagerblöcken (3) installiert sind, die mittels Aktuatoren (6) entlang von parallelen Führungen (4) über zwei seitliche Schultern oder Steigungen (5a, 5b) einer festgelegten Struktur des Kalanders verschiebbar sind, um den Spalt zwischen der ersten Walze (1) und einer zweiten Walze (2a) von ähnlicher Struktur wie die erste Walze (1) einzustellen, drehbare Zwei-Wege-Hydraulik-Verbindungen (7), welche an ein Ende der Hohlwellen beider Walzen (1, 2a) gekoppelt sind, damit ein Fluid zur thermischen Regulierung durch ein Einlass- und ein Auslass-Verteiler-Sammelrohr zirkulieren kann, welche innerhalb der Hohlwellen der Walzen angeordnet sind und jeweils hydraulisch mit Düsen einer hydraulischen Pumpeinheit (8) gekoppelt ist, **dadurch gekennzeichnet, dass**
- die besagten seitlichen Schultern (5a, 5b) der festgelegten Struktur des Kalanders jeweils drehbare Scheiben (9a, 9b) stützen, an welchen Lager zum Tragen hohler Wellen einer Mehrzahl von zweiten Walzen (2a, 3b) mit unterschiedlichen Oberflächen-Morphologien auf ihren Mantelflächen verankert sind, welche zur Anwendung auswählbar sind durch Drehen der besagten drehbaren Scheiben (9a, 9b) um einen gewissen Winkel in einer Richtung oder in der entgegengesetzten Richtung so weit, bis die Gewünschte der Mehrzahl von zweiten Walzen in eine der besagten, ersten Walze (1) gegenüber stehende Position verbracht ist;
- an einer ersten, die besagten Enden der hydraulischen Kupplung der Hohlwellen der besagten zweiten Walzen (2a, 2b) tragenden, drehbaren Scheibe (9a) ist ein durchgangsloses Ende einer rohrförmigen Verteiler-Sammel-Leitung (11) angeschlossen mit paarweisen Eingangs- und Ausgangsdüsen für ein Fluid zur thermischen Regulierung, welche über biegsame Schläuche an jeweilige, drehbare Zwei-Wege-Hydraulik-Verbindungen zur hydraulischen Verbindung der Enden der jeweiligen Hohlwellen der besagten zweiten Walzen (2a, 2b) angeschlossen sind, während das andere Ende der Verteiler-Sammel-Leitung (11) an eine drehbare Zwei-Wege-Primär-Hydraulik-Verbindung (12) angeschlossen ist, die über ein Paar von Leitungen (13) mit den jeweiligen, besagten Düsen der Pumpeinheit (8) hydraulisch verbunden sind;
- an die anderen, die gegenüber liegenden Enden der hohlen Wellen der besagten zweiten Walzen (2a, 2b) tragenden, drehbaren Scheibe (9b) ist eine Gegenplatte (9bis) angeschlossen, an welcher individuelle, die Motorgeschwindigkeit reduzierende Getriebegruppen (M2a, M2b) installiert sind zur Übertragung von Bewegung an die jeweiligen hohlen Wellen über mechanische Kupplungen;
- ferner sind motorisierte Mittel (M9, 9', 9", 9"') vorhanden zur Drehung der besagten Scheiben (9a, 9b) um einen vorgegebenen Drehwinkel in eine Richtung oder in die entgegengesetzte Richtung.

2. Der Kalander nach Anspruch 1, **dadurch gekennzeichnet, dass** er wenigstens eine Kühlwalze (15) mit einer Hohlwelle umfasst für einen laminierten Artikel, der den Spalt zwischen den besagten, geheizten Walzen (1, 2a) verlässt, über deren gekühlte Mantelfläche der Artikel läuft, sowie eine zweite, zentrale Pumpeinheit (8bis) für ein Kühlfluid, angeschlossen über ein Paar von Leitungen (14) und die drehbare Zwei-Wege-Hydraulik-Verbindung (7) an die Einlass- und Auslass-Leitungen für die besagte Kühlflüssigkeit, welche sich an dem Ende der Hohlwelle der besagten Walze (15) befinden.

3. Der Kalander nach Anspruch 1, **dadurch gekennzeichnet, dass** das besagten, motorisierten Mittel eine die Motorgeschwindigkeit reduzierende Getriebegruppe (M2a, M2b) umfassen sowie eine Transmission, die aus ersten Zahnrädern (9') zusammengesetzt ist, welche an der jeweiligen, drehbaren Scheibe (9a, 9b) befestigt sind und Schlitze für den Durchtritt der Enden der besagten Hohlwellen der besagten zweiten Walzen (2a) aufweisen, sowie zweite Zahnräder (9") welche auf die Enden der Transmissionswelle (9"') aufgesteckt sind und sich mit den besagten, ersten Zahnrädern (9') in Eingriff befinden.

4. Der Kalander nach Anspruch 1, **dadurch gekennzeichnet, dass** die besagten zweiten Walzen (2a,2b), welche unterschiedliche Oberflächenmorphologien haben und in den besagten drehbaren Scheiben (9a, 9b) gelagert sind, zwei durch Drehung der besagten drehbaren Scheiben (9a, 9b) um einen Winkel von 180° individuell auswählbaren Walzen sind.

5. Der Kalander nach Anspruch 1, **dadurch gekennzeichnet, dass** die besagten zweiten Walzen (2a,2b), welche unterschiedliche Oberflächenmorphologien haben und in den besagten drehbaren Scheiben (9a, 9b) gelagert sind, drei durch Drehung der besagten drehbaren Scheiben (9a, 9b) um einen Winkel von 120° individuell auswählbaren Walzen sind.

## Revendications

1. Calandre pour l'usinage de matériaux nécessitant un ou deux rouleaux d'une paire de rouleaux calandreurs pour avoir un manteau thermorégulé ayant une morphologie de surface comprenant des ciselages, des rainures ou des gaufrages de géométrie, de distribution et de dimensions spécifiques aux caractéristiques morphologiques à donner au matériau calandré, comprenant un premier rouleau (1) avec un arbre creux supporté sur des paliers installés sur des blocs de support (3) pouvant être déplacés le long de guides parallèles (4) sur deux épaulements ou montants latéraux (5a, 5b) d'une structure fixe de la calandre au moyen d'actionneurs (6) afin d'ajuster la ligne de contact entre le premier rouleau (1) et un second rouleau (2a) de structure similaire au premier rouleau (1), des joints hydrauliques rotatifs à deux voies (7) couplés à une extrémité des arbres creux des deux rouleaux (1, 2a) pour faire circuler un fluide de thermorégulation par des collecteurs de distribution d'écoulement d'entrée et de sortie internes par rapport aux arbres creux des rouleaux et hydrauliquement raccordés aux buses respectives d'une unité de pompage hydraulique (8), **caractérisée en ce que** :
lesdits épaulements latéraux (5a, 5b) de la structure fixe de la calandre supportent des disques rotatifs (9a, 9b) respectifs sur lesquels sont montés des paliers pour supporter des arbres creux d'une pluralité de seconds rouleaux (2a, 2b) ayant différentes morphologies de surface sur leurs manteaux et qui peuvent être sélectionnés pour être utilisés en tournant selon un certain angle dans une direction ou dans la direction opposée desdits disques rotatifs (9a, 9b), jusqu'à amener le rouleau souhaité de ladite pluralité de seconds rouleaux dans une position opposée audit premier rouleau (1) ;
un premier disque rotatif (9a) supportant lesdites extrémités de couplage hydraulique des arbres creux desdits seconds rouleaux (2a, 2b) est axialement raccordé à une extrémité borgne d'un distributeur-collecteur tubulaire (11) ayant des paires de buses d'entrée et de sortie de fluide de thermorégulation raccordées par des tubes flexibles aux joints hydrauliques rotatifs à deux voies respectifs pour le raccordement hydraulique aux extrémités des arbres creux respectifs desdits seconds rouleaux (2a, 2b), l'autre extrémité du distributeur-collecteur (11) étant couplée à un joint hydraulique principal rotatif à deux voies (12), hydrauliquement raccordé par une paire de tubes (13) auxdites buses respectives de l'unité de pompage (8) ;
à l'autre disque rotatif (9b) supportant les extrémités opposées des arbres creux des seconds rouleaux (2a, 2b), est raccordée une contre-plaque (9bis) sur laquelle sont installés des groupes moteur-motoréducteur individuels (M2a, M2b) de transmission de mouvement par le biais de couplages mécaniques aux arbres creux respectifs ;
des moyens motorisés (M9, 9',9", 9"') pour faire tourner lesdits disques rotatifs (9a, 9b) dans une direction ou dans la direction opposée par un angle de rotation donné, étant en outre compris.

2. Calandre selon la revendication 1, **caractérisée en ce qu'**elle comprend au moins un rouleau de refroidissement d'arbre creux (15) sur un article calandré sortant de la ligne de contact entre lesdits rouleaux chauffés (1, 2a), sur le manteau refroidi desquels l'article circule, et une seconde unité de pompage (8bis) d'un fluide de refroidissement, raccordée par une paire de tubes (14) et le joint hydraulique rotatif à deux voies (7) aux conduits d'entrée et de sortie dudit fluide de refroidissement présent à l'extrémité de l'arbre creux du rouleau de refroidissement (15).

3. Calandre selon la revendication 1, **caractérisée en ce que** lesdits moyens motorisés comprennent un groupe moteur-motoréducteur (M2a, M2b) et une transmission composée de premières roues dentées (9') fixées aux disques rotatifs (9a, 9b) respectifs et ayant des fentes pour le passage de l'extrémité desdits arbres creux desdits seconds rouleaux (2a) et des secondes roues dentées (9") clavetées respectivement sur les extrémités d'un arbre de transmission (9"') et mises en prise avec lesdites premières roues dentées (9').

4. Calandre selon la revendication 1, **caractérisée en ce que** lesdits seconds rouleaux (2a, 2b) ayant différentes morphologies de surface et étant supportés dans lesdits disques rotatifs (9a, 9b) sont deux rouleaux pouvant être individuellement sélectionnés par la rotation desdits disques rotatifs (9a, 9b) à un angle de 180°.

5. Calandre selon la revendication 1, **caractérisée en ce que** lesdits seconds rouleaux ayant une morphologie de surface différente et étant supportés par lesdits disques rotatifs (9a, 9b) sont trois rouleaux (2a, 2b, 2c) pouvant être individuellement sélectionnés par la rotation desdits disques rotatifs (9a, 9b) à un angle de 120°.
